# EUROPÄISCHE PATENTANMELDUNG

(11) **EP 0 584 645 A2**
(43) Veröffentlichungstag der Anmeldung: **02.03.1994**
(21) Anmeldenummer: 93112828.4
(22) Anmeldetag: 10.08.1993
(51) Int. Cl.: G06F 11/22

(54) **Verfahren zum überprüfen einer programmgesteuerten elektrischen Einrichtung**

(30) Priorität: 25.08.1992 DE 4228222
(71) Anmelder: SIEMENS AKTIENGESELLSCHAFT, D-80333 München (DE)
(72) Erfinder: Harbrink , Helmut, Dipl.-Ing., D-81477 München (DE); Rudorff, Ingo, Dipl.-Ing., D-81739 München (DE); Schürmann, Cornelius, Dipl.-Ing., D-81735 München (DE)

(57) **Zusammenfassung**

An die betreffende elektrische Einrichtung (z.B. DUE1) wird über eine gesonderte Bedienschnittstelle (E/A1) eine Bedieneinrichtung (PC) angeschlossen. Auf von dieser Bedieneinrichtung her abgegebene festgelegte Steuersignale hin wird in der betreffenden elektrischen Einrichtung eine während des Betriebs als Hintergrundroutine ablaufende Bedienungsroutine aktiviert. Auf ein erstes der festgelegten Steuersignale hin wird im Zuge der Bedienungsroutine ein Datenblock zu der Bedieneinrichtung (PC) übertragen, welcher Zustandsinformationen bezüglich der Zustände von externen Schnittstellenleitungen bzw. von Prüfschleifen der betreffenden elektrischen Einrichtung enthält. Diese Zustandsinformationen werden dabei in der Bedieneinrichtung zur Anzeige gebracht. Auf wenigstens ein zweites der festgelegten Steuersignale hin wird dagegen im Zuge der Bedienungsroutine die jeweilige Prüfschleife aktiviert und über diese anschließend eine festgelegte Prüfinformation übertragen.

## Beschreibung

Die Erfindung betrifft ein Verfahren gemäß Oberbegriff des Patentanspruches 1. Ein solches Verfahren ist bereits bekannt (Telcom Report 10 (1987) Special "Multiplex- und Leitungseinrichtungen", Seiten 211 bis 217). Mit diesem bekannten Verfahren ist es lediglich möglich, unmittelbar an der elektrischen Einrichtung Zustandsinformationen bezüglich externer Schnittstellenleitungen bzw. bezüglich steuerbarer Prüfschleifen anzuzeigen und Prüfschleifen zu aktivieren bzw. zu deaktivieren. Für allgemeine Anwendungsfälle ist es jedoch häufig erwünscht, eine Überprüfung einer programmgesteuerten elektrischen Einrichtung durch eine von dieser abgesetzte Bedieneinrichtung vorzunehmen.

Weiterhin ist bereits ein Verfahren zur Steuerung der Abfrage bzw. Änderung von Betriebsparametern einer programmgesteuerten elektrischen Einrichtung vorgeschlagen worden (P 42 16 717.5). Bei diesem Verfahren wird eine Bedieneinrichtung an eine gesonderte Bedienschnittstelle der elektrischen Einrichtung angeschlossen. Von der Bedieneinrichtung her wird ein Steuersignal abgegeben, auf dessen Empfang hin von der elektrischen Einrichtung im Zuge einer während des Betriebs der elektrischen Einrichtung als Hintergrundroutine ablaufenden Bedienungsroutine ein Datenblock zu der Bedieneinrichtung hin übertragen wird, welcher zumindest Informationen bezüglich sämtlicher Betriebsparameter sowie diesen zugeordnete, eine Änderungsfreigabe bzw. Änderungssperre des jeweiligen Betriebsparameters anzeigende Markierungsinformationen enthält. Durch die Bedieneinrichtung werden dabei lediglich solche Betriebsparameter für eine Änderung freigegeben, deren Änderungsfreigabe durch die zugehörige Markierungsinformation angezeigt ist. Auf eine Änderung wenigstens eines der Betriebsparameter wird von der Bedieneinrichtung ein dem genannten Datenblock entsprechender Datenblock gebildet und abschnittweise unter einem individuellen Quittieren jedes der Abschnitte des Datenblockes durch die elektrische Einrichtung übertragen. Durch die elektrische Einrichtung wird lediglich auf den vollständigen Empfang eines Datenblockes hin nach Maßgabe der darin enthaltenen Informationen eine Änderung der bisher in der elektrischen Einrichtung gespeicherten Betriebsparameter vorgenommen.

Es ist nun Aufgabe der vorliegenden Erfindung, einen Weg zu zeigen, wie ein Verfahren gemäß Oberbegriff des Patentanspruches 1 ausgebildet werden kann, um eine programmgesteuerte elektrische Einrichtung mit einem geringen Steuerungsaufwand mit Hilfe einer gesonderten Bedieneinrichtung überprüfen zu können.

Gelöst wird diese Aufgabe durch die im Patentanspruch 1 angegebenen Verfahrensmerkmale. Die Erfindung bringt dabei den Vorteil mit sich, daß unter der Steuerung einer als Hintergrundroutine ablaufenden Bedienungsroutine einerseits im laufenden Betrieb der elektrischen Einrichtung Zustandsinformationen bezüglich externer Schnittstellenleitungen bzw. bezüglich einlegbarer Prüfschleifen durch die Bedieneinrichtung abgefragt und die Zustandsinformationen dort angezeigt werden können und andererseits durch die betreffende Bedieneinrichtung Prüfschleifen aktiviert bzw. deaktiviert werden können. Damit sind in der elektrischen Einrichtung keinerlei Anzeige- und Bedienelemente erforderlich.

Vorteilhafte Ausgestaltungen des Verfahrens gemäß der vorliegenden Erfindung ergeben sich aus den Patentansprüchen 2 bis 7. Der Vorteil der Ausgestaltung gemäß Patentanspruch 2 besteht dabei darin, daß mit einem geringen zusätzlichen Steuerungsaufwand durch die Bedieneinrichtung wahlweise die genannten Zustandsinformationen von einer von der Bedieneinrichtung abgesetzten elektrischen Einrichtung abgefragt bzw. in der abgesetzten elektrischen Einrichtung Prüfschleifen aktiviert bzw. deaktiviert werden können. Ein weiterer Vorteil besteht darin, daß dafür ein ohnehin zwischen zwei elektrischen Einrichtungen bestehender Verbindungsweg benutzt wird, so daß keine gesonderten Steuerleitungen zwischen der Bedieneinrichtung und einer davon abgesetzten elektrischen Einrichtung erforderlich sind.

Der Vorteil der Ausgestaltung gemäß Patentanspruch 3 besteht darin, daß für die Übertragung von Steuersignalen und Datenblöcken ein einheitliches Blockformat gewählt ist, so daß in der jeweiligen elektrischen Einrichtung bzw. in der Bedieneinrichtung mit einem geringen Steuerungsaufwand eine Behandlung von Steuersignalen bzw. von in Datenblöcken übertragenen Informationen möglich ist.

Die Ausgestaltung gemaß Patentanspruch 4 bringt den Vorteil mit sich, daß Datenblöcke zu der Bedieneinrichtung hin im Zuge einer Hintergrundroutine abschnittweise übertragen werden, so daß der normale Betrieb der elektrischen Einrichtung nicht beeinträchtigt ist.

Durch die Patentansprüche 5 bis 7 sind alternative Lösungen angegeben, die in einfacher Weise nach dem Aktivieren von Prüfschleifen eine Überprüfung der jeweiligen elektrischen Einrichtung ermöglichen.

Im folgenden wird nun die vorliegende Erfindung anhand von Zeichnungen näher erläutert.
Figur 1 zeigt in einem Blockschaltbild die Verbindung zweier elektrischer Einrichtungen in Form von Datenübertragungseinrichtungen sowie eine an eine der Datenübertragungseinrichtungen angeschlossene Bedieneinrichtung und
Figuren 2 und 3 zeigen die Strukturen von Steuersignalblöcken und Datenblöcken, auf welche im folgenden näher eingegangen wird.

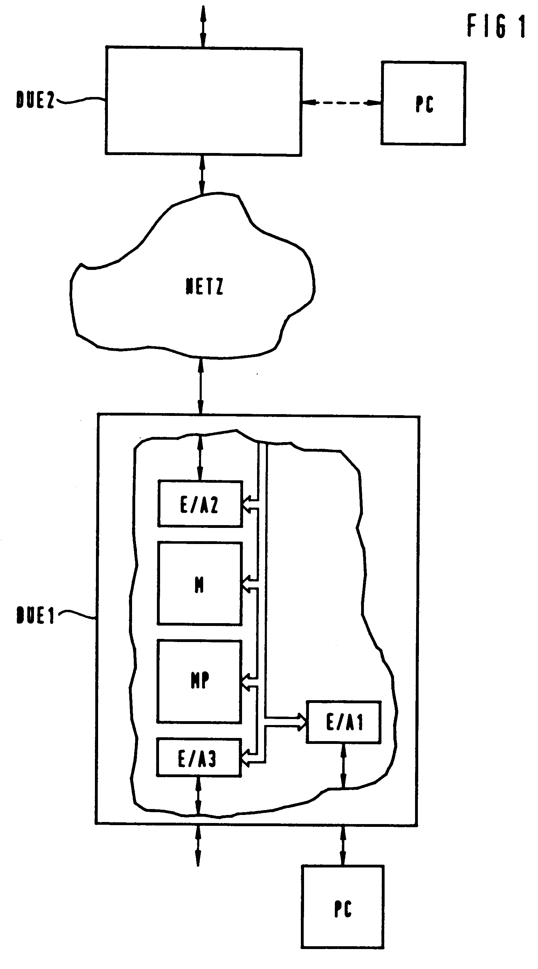

In Figur 1 sind zwei miteinander verbundene elektrische Einrichtungen DUE1 und DUE2 dargestellt, bei denen es sich beispielsweise um in gleicher Weise aufgebaute Datenübertragungseinrichtungen handeln möge, über welche Teilnehmereinrichtungen an ein Datenfestnetz oder Datenvermittlungsnetz anschließbar sind. Wie dargestellt, möge die Verbindung dieser Datenübertragungseinrichtungen dabei über ein derartiges Datennetz erfolgen.

Bei jeder der Datenübertragungseinrichtungen DUE1 und DUE2 handelt es sich um eine programmgesteuerte Einrichtung, die beispielsweise eine Mikroprozessor-Anordnung aufweisen möge. In Figur 1 ist dabei lediglich ausschnittweise die Mikroprozessor-Anordnung für die Datenübertragungseinrichtung DUE1 dargestellt. Danach ist an ein Busleitungssystem eines Mikroprozessors MP, bei dem es sich beispielswseise um einen sogenannten Ein-Chip-Mikroprozessor handeln möge, eine Speicheranordnung M angeschlossen. Diese Speicheranordnung weist beispielsweise einen als Programmspeicher dienenden Festwertspeicher sowie einen während des Betriebs der Datenübertragungseinrichtung als Datenspeicher dienenen Schreib-Lese-Speicher auf. In dem Festwertspeicher sind dabei u.a. eine Bedienungsroutine und eine Übertragungs-Routine gespeichert, auf die im folgenden noch näher eingegangen wird. Darüber hinaus sind beispielsweise in einem festgelegten Bereich des Schreib-Lese-Speichers Zustandsinformationen bezüglich externer Schnittstellenleitungen bzw. steuerbarer Prüfschleifen gespeichert. Auf diese Schnittstellenleitungen und Prüfschleifen wird im folgenden noch näher eingegangen.

An das genannte Busleitungssystem des Mikroprozessors sind weiterhin drei Schnittstellenanordnungen E/A1, E/A2 und E/A3 angeschlossen. Die Schnittstellenanordnungen E/A2 und E/A3 dienen dabei für die Aufnahme und Abgabe von Datensignalen und Signalisierungssignalen über Teilnehmerleitungen bzw. über das genannte Datenvermittlungsnetz. Die Schnittstellenanordnung E/A1 ist dagegen als Bedienschnittstelle für die Übertragung von Steuersignalen vorgesehen. An diese ist, wie in Figur 1 dargestellt, eine Bedieneinrichtung PC beispielsweise in Form eines Personalcomputers anschließbar. Von dieser Bedieneinrichtung her sind die zuvor genannten Zustandsinformationen der Datenübertragungseinrichtungen DUE1 und DUE2 abfragbar bzw. Prüfschleifen innerhalb der Datenübertragungseinrichtungen aktivierbar bzw. deaktivierbar.

Wie aus Figur 1 weiterhin hervorgeht, ist die gerade erwähnte Bedieneinrichtung PC auch alternativ an die Datenübertragungseinrichtung DUE2 anschließbar. Für die folgenden Erläuterungen wird jedoch davon ausgegangen, daß diese Bedieneinrichtung lediglich mit der Datenübertragungseinrichtung DUE1 verbunden ist.

Im folgenden wird davon ausgegangen, daß die beiden Datenübertragungseinrichtungen DUE1 und DUE2 sich jeweils in ihrem Betriebszustand befinden, d.h. daß über diese beispielsweise eine Datenkommunikation zwischen zwei Teilnehmer-Endeinrichtungen des Datennetzes stattfindet. Für diese Datenkommunikation sei beispielsweise eine synchrone Übertragung gemäß der CCITT-Empfehlung X.21 vorgesehen, d.h. die zu übertragenden Informationen treten in sogenannten Envelopes auf, die jeweils neben einer festgelegten Anzahl von Datenbits über ein Alignment-Bit und ein Statusbit verfügen. Dabei wird beispielsweise durch das Statusbit angezeigt, ob es sich bei den in dem jeweiligen Envelope enthaltenen Datenbits um Nachrichtensignale oder Signalisierungssignale handelt.

Weiterhin wird im folgenden davon ausgegangen, daß an die Schnittstellenanordnungen E/A2 und E/A3 externe Schnittstellenleitungen angeschlossen sind, die entsprechend der CCITT-Empfehlung X.21 bzw. V.24 ausgelegt sind, und daß innerhalb der Datenübertragungseinrichtungen DUE1 und DUE2 jeweils Prüfschleifen beispielsweise entsprechend der CCITT-Empfehlung V.54 einlegbar sind.

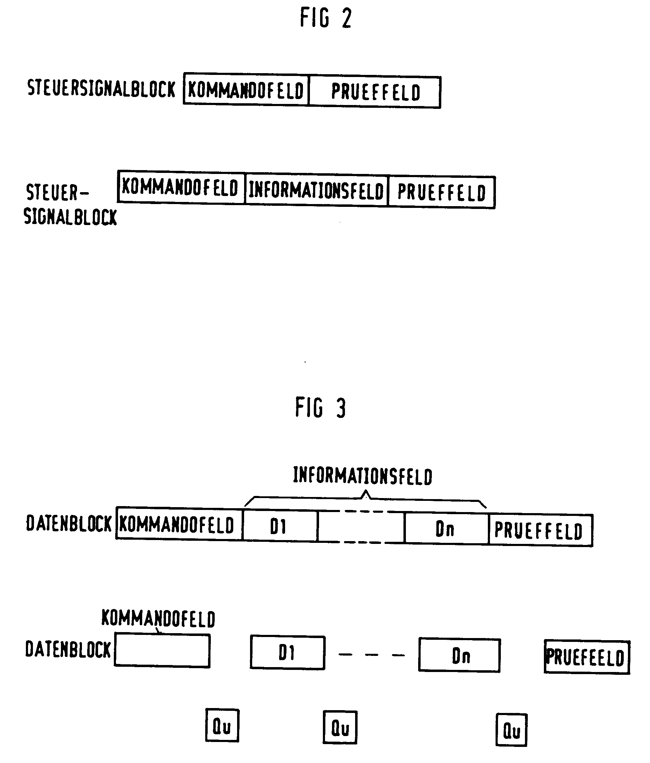

Ist nun während des Betriebs beispielsweise eine Abfrage der in der Datenübertragungseinrichtung DUE1 gespeicherten Zustandsinformationen bezüglich der genannten externen Schnittstellenleitungen und bezüglich der Prüfschleifen vorgesehen, so wird die bereits erwähnte Bedieneinrichtung PC an die Bedienschnittstelle E/A1 der Datenübertragungseinrichtung DUE1 angeschlossen. Dieses Anschließen bewirkt, daß durch den Mikroprozessor MP der Datenübertragungseinrichtung DUE1 eine als Hintergrundroutine zu dem zuvor erwähnten Betriebsprogramm ablaufende Bedienungsroutine aktiviert wird, unter deren Steuerung zunächst zu der Bedieneinrichtung PC hin ein Informationssignal SY übertragen wird. Durch dieses wird einerseits die Bereitschaft für eine Bedienungseingabe und andererseits der Betriebszustand bzw. der Gerätetyp (Geräteversion) der Datenübertragungseinrichtung DUE1 angezeigt. Auf dieses Informationssignal hin wird in der Bedieneinrichtung PC eine Bedienungsroutine aktiviert, unter deren Steuerung ein der Abfrage von Zustandsinformationen dienendes erstes Steuersignal zu der Datenübertragungseinrichtung DUE1 hin übertragen wird. Dieses Steuersignal kann dabei beispielsweise, wie aus Figur 2 hervorgeht, aus einem Kommandofeld mit einer festgelegten Anzahl von Bits gebildet sein, welchem ein ebenfalls eine vorgegebene Anzahl von Bits umfassendes Prüffeld angefügt ist. Das erste Steuersignal ist dabei durch eine bestimmte Bitkombination der zu dem Kommandofeld gehörenden Bits festgelegt. Die in dem Prüffeld enthaltene Information dient dagegen in der Datenübertragungseinrichtung DUE1 für eine Überprüfung auf eine fehlerfreie Übertragung des betreffenden Steuersignals. Dafür kann beispielsweise in dem Prüffeld eine Prüfsumme eingetragen sein, welche sich aus einer binären Addition sämtlicher in dem Kommandofeld enthaltenen Bits ergibt. Anstelle einer solchen Prüfsumme können jedoch auch für die Überprüfung des Kommandofeldes anderweitige Prüfinformationen enthalten sein.

Bei Vorliegen eines fehlerfrei übertragenen Steuersignals wird dann im laufenden Betrieb von der Datenübertragungseinrichtung DUE1 unter der Steuerung der aktivierten Bedienungsroutine ein Datenblock gebildet und über die Bedienschnittstelle E/A1 zu der Bedieneinrichtung PC hin übertragen. Ein solcher Datenblock, der in Figur 3 schematisch dargestellt ist, weist dabei ein dem zuvor erwähnten Kommandofeld eines Steuersignals entsprechendes Kommandofeld mit einer festgelegten Bitkombination auf, welchem ein Informationsfeld angefügt ist. Dieses Informationsfeld möge dabei aus einer Mehrzahl von Abschnitten mit jeweils einer vorgegebenen Anzahl von Bits, beispielsweise 8 Bits, gebildet sein. In jedem dieser Abschnitte, in Figur 3 mit Dl bis Dn bezeichnet, sind dabei Zustandsinformationen bezüglich wenigstens einer der genannten externen Schnittstellenleitungen bzw. bezüglich wenigstens einer Prüfschleife enthalten. Ein solcher Datenblock ist schließlich durch ein dem oben erwähnten Prüffeld entsprechendes Prüffeld abgeschlossen.

Auf den Empfang eines Datenblockes hin erfolgt zunächst in der Bedieneinrichtung PC mit Hilfe der in dem Prüffeld enthaltenen Information eine Überprüfung auf eine fehlerfreie Übertragung des gerade empfangenen Datenblockes. Hierzu kann in dem Prüffeld wiederum eine Prüfsumme enthalten sein, die sich aus einer binären Addition sämtlicher in dem Quittungsfeld und Informationsfeld enthaltenen Bits ergibt. Liegt eine fehlerfreie Übertragung vor, so werden die in dem Informationsfeld enthaltenen Informationen gegebenenfalls nach einer Bearbeitung zu einer Anzeige auf einer Anzeigeanordnung der Bedieneinrichtung PC beispielsweise in Form eines Bildschirmes gebracht. Liegt dagegen eine fehlerhafte Übertragung eines Datenblockes vor, so unterbleibt eine derartige Anzeige und es wird das zuvor erwähnte erste Steuersignal nochmals zu der Datenübertragungseinrichtung DUE1 hin übertragen, um in dieser ein erneutes Aussenden des Datenblockes zu veranlassen.

Im übrigen kann ein Datenblock auch alternativ, wie in Figur 3 dargestellt, abschnittweise nach einem sogenannten "hand shaking"-Prinzip zu der Bedieneinrichtung PC hin übertragen werden und zwar unter einem individuellen Quittieren Qu jedes der Abschnitte des Datenblockes durch die Bedieneinrichtung. Auf diese Weise kann unter der Steuerung des Mikroprozessors MP der Datenübertragungseinrichtung DUE1 ein Datenblock übertragen werden, ohne die durch das Betriebsprogramm gesteuerte Datenübertragung zwischen den beiden Datenübertragungseinrichtungen zu beeinträchtigen.

Zusätzlich oder alternativ zu dem genannten ersten Steuersignal kann von der Bedieneinrichtung PC her ein zweites Steuersignal an die Datenübertragungseinrichtung DUE1 abgegeben werden, mit welchem in dieser Datenübertragungseinrichtung eine der oben bereits erwähnten Prüfschleifen aktivierbar bzw. deaktivierbar ist. Der für dieses Steuersignal benutzte Steuersignalblock ist in Figur 2 dargestellt. Danach verfügt dieser, wie auch der für das erste Steuersignal benutzte Steuersignalblock, über ein Kommandofeld mit einer festgelegten Bitkombination sowie über ein bereits erwähntes Prüffeld. Zwischen diesen beiden Feldern ist ein Informationsfeld eingefügt, in welchem für jede der möglichen Prüfschleifen eine Bitstelle vorgesehen ist. Durch den logischen Pegel des jeweiligen Bits ist dabei angegeben, ob die diesem zugeordnete Prüfschleife durch den Mikroprozessor MP der Datenübertragungseinrichtung DUE1 zu aktivieren bzw. zu deaktivieren ist. Mit dem Aktivieren bzw. Deaktivieren einer Prüfschleife wird in der genannten Speicheranordnung M der Datenübertragungseinrichtung DUE1 eine entsprechende Zustandsinformation gespeichert sowie zu der Bedieneinrichtung PC hin ein Quittungssignal übertragen. Als Quittungssignal kann dabei beispielsweise der von der Datenübertragungseinrichtung DUE1 zuvor empfangene Steuersignalblock zurückübertragen werden.

Auf das Aktivieren einer der genannten Prüfschleifen hin wird die eigentliche Schleifenprüfung durchgeführt. Hierzu kann beispielsweise so vorgegangen werden, daß von der Datenübertragungseinrichtung DUE1, d.h. unter der Steuerung des zugehörigen Mikroprozessors MP, eine Prüfinformation über die Prüfschleife übertragen und die rücklaufende Prüfinformation durch Vergleich mit der zuvor abgegebenen Prüfinformation ausgewertet wird. Dabei kann je nach der Realisierung der jeweiligen Prüfschleife die rücklaufende Prüfinformation gegenüber der abgegebenen Prüfinformation modifiziert sein, indem beispielsweise wenigstens 1 Bit der Prüfinformation beim Durchlauf durch die jeweilige Prüfschleife invertiert wird. Das Prüfergebnis wird dann der Bedieneinrichtung PC beispielsweise durch einen dem ersten Steuersignal entsprechenden Steuersignalblock mit einer festgelegten Bitkombination des Kommandofeldes mitgeteilt.

Eine weitere Möglichkeit der Schleifenprüfung besteht darin, daß die genannte Prüfinformation von der Bedieneinrichtung PC her abgegeben wird. Hierzu kann ein dem in Figur 3 dargestellten Datenblock entsprechender Datenblock benutzt sein, in dessen Informationsteil die Prüfinformation enthalten ist. Nach der Übertragung der Prüfinformation über die jeweilige Prüfschleife der Datenübertragungseinrichtung DUE1 wird dann der Bedieneinrichtung PC ein entsprechender Datenblock mit der rückübertragenen Prüfinformation für eine Auswertung zugeführt.

Schließlich kann auch eine gesonderte Prüfeinrichtung an die Schnittstellenanordnung E/A3 angeschlossen werden, die sowohl die Prüfinformation liefert als auch nach deren Durchlauf durch die jeweilige Prüfschleife eine Auswertung der rückübertragenen Prüfinformation vornimmt.

Vorstehend wurde die Abfrage von Zustandsinformationen und das Aktivieren bzw. Deaktivieren von Prüfschleifen mit Hilfe der Bedieneinrichtung PC lediglich am Beispiel der Datenübertragungseinrichtung DUE1 erläutert. Die vorstehenden Ausführungen gelten jedoch auch sinngemäß für die Datenübertragungseinrichtung DUE2, wenn an dieser eine der Bedieneinrichtung PC entsprechende Bedieneinrichtung angeschlossen ist. Damit ist es also möglich, die beiden Datenübertragungseinrichtungen unabhängig voneinander zu steuern.

Zusätzlich oder alternativ zu dem zuvor erläuterten Abfragen von Zustandsinformationen und zu dem Aktivieren bzw. Deaktivieren von Prüfschleifen in der mit der Bedieneinrichtung PC direkt verbundenen Datenübertragungseinrichtung DUE1 kann von der Bedieneinrichtung PC her auch über diese Datenübertragungseinrichtung eine Fernabfrage von in der Datenübertragungseinrichtung DUE2 gespeicherten Zustandsinformationen und ein Fernaktivieren bzw. Ferndeaktivieren von Prüfschleifen in der Datenübertragungseinrichtung DUE2 erfolgen. Hierzu gibt die Bedieneinrichtung den Steuersignalen gemäß Figur 2 entsprechende Steuersignale mit einer festgelegten Bitcodierung des Kommandofeldes ab. Auf das jeweilige Steuersignal hin aktiviert der Mikroprozessor MP der Datenübertragungseinrichtung DUE1 nach einer Überprüfung des Steuersignals auf einen fehlerfreien Empfang eine Übertragungs-Routine, die in dem oben erwähnten Festwertspeicher dieser Datenübertragungseinrichtung gespeichert ist. Unter der Steuerung dieser Übertragungs-Routine leitet dann die Datenübertragungseinrichtung DUE1 ein dem gerade empfangenen Steuersignal entsprechendes, an das innerhalb des Datennetzes benutzte Datensignalformat angepaßtes Steuersignal über die Schnittstellenanordnung E/A2 an die Datenübertragungseinrichtung DUE2 weiter. Das heißt, das jeweilige Steuersignal wird beispielsweise bei dem oben angegebenen envelopeweisen Übertragungsprinzip in aufeinanderfolgenden Envelopes übertragen, wobei durch das jeweils zugehörige Statusbit das Vorliegen eines Signalsierungssignals engezeigt wird.

Der Mikroprozessor der Datenübertragungseinrichtung DUE2 aktiviert auf den Empfang eines Steuersignals hin die in dieser als Hintergrundroutine gespeicherte Bedienungsroutine, und zwar nach einer vorausgegangenen Überprüfung des Steuersignals hinsichtlich einer fehlerfreien Übertragung. Nach dieser Aktivierung erfolgt dann eine Kommunikation zwischen der Bedieneinrichtung PC und der Datenübertragungseinrichtung DUE2 in der oben erläuterten Weise, jedoch nunmehr unter Einbeziehung der Datenübertragungseinrichtung DUE1. Die Aufgabe dieser Datenübertragungseinrichtung besteht dabei einerseits in der Weiterleitung der zwischen der Bedieneinrichtung PC und der Datenübertragungseinrichtung DUE2 auszutauschenden Signale. Andererseits erfolgt durch die Datenübertragungseinrichtung DUE1 eine Überprüfung dieser Signale auf eine fehlerfreie Übertragung, welche in der oben bereits erwähnten Weise durchgeführt wird. Ein Übertragungsfehler wird dabei der Bedieneinrichtung PC bzw. der Datenübertragungseinrichtung DUE2 durch einen Steuersignalblock mit einem entsprechend codierten Kommandofeld angezeigt.

Bezüglich der oben erwähnten Zustandsinformationen der externen Schnittstellenleitungen sei darauf hingewiesen, daß in den Datenübertragungseinrichtungen DUE1 und DUE2 jeweils neben momentanen, fortlaufend oder in festgelegten Zeitintervallen aktualisierten Schnittstellenzuständen auch beispielsweise auf den Schnittstellenleitungen, insbesondere auf den in die Datenübertragung zwischen den beiden Datenübertragungseinrichtungen einbezogenen Schnittstellenleitungen, auftretende Alarm- bzw. Fehlerzustände beispielsweise unter Angabe von Uhrzeit und Datum in dem genannten Schreib-Lese-Speicher gespeichert und in der oben angegebenen Weise abgefragt werden können. Darüber hinaus kann auch bei der oben angenommenen envelopeweisen Datenübertragung beispielsweise die Anzahl der in festgelegten Zeitintervallen jeweils fehlerhaft aufgetretenen Alignment-Bits bzw. die daraus resultierende Bitfehlerrate in der jeweiligen Datenübertragungseinrichtung festgehalten und durch die Bedieneinrichtung PC zusammen mit den übrigen Zustandsinformationen abgefragt werden.

Abschließend sei außerdem noch darauf hingewiesen, daß zwar vorstehend die vorliegende Erfindung am Beispiel zweier miteinander verbundener Datenübertragungseinrichtungen erläutert worden ist. Die vorliegende Erfindung ist jedoch nicht darauf beschränkt, sondern sie ist vielmehr allgemein dann anwendbar, wenn Zustandsinformationen gegebenenfalls miteinander verbundener programmgesteuerter elektrischer Einrichtungen abzufragen bzw. Prüfschleifen zu aktivieren bzw. zu deaktivieren sind.

## Patentansprüche

1. Verfahren zur Überprüfung einer programmgesteuerten elektrischen Einrichtung (z.B. DUE1), insbesondere Datenübertragungseinrichtung, in welcher Zustandsinformationen bezüglich der Zustände externer Schnittstellenleitungen gespeichert sind und in welcher wengistens eine Prüfschleife aktivierbar bzw. deaktivierbar ist,
**dadurch gekennzeichnet,**
daß eine Bedieneinrichtung (PC) an eine gesonderte Bedienschnittstelle (E/A1) der elektrischen Einrichtung angeschlossen wird,
daß auf von der Bedieneinrichtung her abgegebene festgelegte Steuersignale hin in der betreffenden elektrischen Einrichtung eine während des Betriebs als Hintergrundroutine ablaufende Bedienungsroutine aktiviert wird,
daß auf ein erstes der festgelegten Steuersignale hin im Zuge der Bedienungsroutine ein die Zustandsinformationen bezüglich der Zustände wenigstens eines Teiles der externen Schnittstellenleitungen bzw. der jeweiligen Prüfschleife enthaltender Datenblock zu der Bedieneinrichtung (PC) hin übertragen und die Zustandsinformationen dort zur Anzeige gebracht werden
und daß auf wenigstens ein zweites der festgelegten Steuersignale hin im Zuge der Bedienungsroutine die jeweilige Prüfschleife aktiviert und über diese anschließend eine festgelegte Prüfinformation übertragen wird.

2. Verfahren nach Anspruch 1,
**dadurch gekennzeichnet,**
daß eine mit der Bedieneinrichtung (PC) verbundene erste elektrische Einrichtung (DUE1) für eine Datenkommunikation über eine Datenschnittstelle (E/A2) mit einer zweiten programmgesteuerten elektrischen Einrichtung (DUE2) in Verbindung steht,
daß von der Bedieneinrichtung (PC) her wahlweise von den ersten und zweiten Steuersignalen abweichende dritte und vierte Steuersignale an die mit dieser verbundene erste elektrische Einrichtung (DUE1) abgegeben werden, auf deren Auftreten hin in der ersten elektrischen Einrichtung eine Übertragungs-Routine aktiviert wird,
daß auf das Aktivieren der Übertragungs-Routine von der ersten elektrischen Einrichtung her ein dem dritten bzw. vierten Steuersignal entsprechendes Steuersignal über die Datenschnittstelle (E/A2) zu der zweiten elektrischen Einrichtung hin übertragen wird,
daß auf das Auftreten des dritten bzw. vierten Steuersignals hin in der zweiten elektrischen Einrichtung eine der genannten Bedienungsroutine entsprechende, als Hintergrundroutine ablaufende Bedienungsroutine aktiviert wird und daß anschließend unter der Steuerung der in der zweiten elektrischen Einrichtung ablaufenden Bedienungsroutine und der in der ersten elektrischen Einrichtung ablaufenden Übertragungs-Routine bei Auftreten des dritten Steuersignals Zustandsinformationen bezüglich der Zustände wenigstens eines Teiles der externen Schnittstellenleitungen bzw. der jeweiligen Prüfschleife der zweiten elektrischen Einrichtung in einem dem genannten Datenblock entsprechenden Datenblock unter Einbeziehung der ersten elektrischen Einrichtung (DUE1) und der Datenschnittstelle (E/A2) zu der Bedieneinrichtung (PC) hin übertragen werden bzw. bei Auftreten des vierten Steuersignals die dadurch bezeichnete Prüfschleife in der zweiten elektrischen Einrichtung aktiviert und über diese anschließend eine festgelegte Prüfinformation unter Einbeziehung der ersten elektrischen Einrichtung (DUE1) und der Datenschnittstelle (E/A2) übertragen wird.

3. Verfahren nach Anspruch 1 oder 2,
**dadurch gekennzeichnet,**
daß die Steuersignale jeweils in Form eines Steuersignalblockes übertragen werden,
daß der jeweilige Steuersignalblock bzw. Datenblock aus einem Kommandofeld mit einer festgelegten Anzahl von Steuerbits sowie aus einem der Datensicherung dienenden Prüffeld mit einer gegebenenfalls von der Anzahl der Steuerbits abweichenden Anzahl von Prüfbits gebildet ist, daß durch unterschiedliche Bitkombinationen des Kommandofeldes das Vorliegen eines der Steuersignale bzw. eines Datenblockes markiert wird,
daß bei einem Datenblock bzw. einem das Vorliegen eines zweiten oder vierten Steuersignals anzeigenden Steuersignalblock zwischen Kommandofeld und Prüffeld ein Informationsfeld eingefügt ist,
daß in dem Informationsfeld eines Datenblockes die genannten Zustandsinformationen übertragen werden und daß in dem Informationsfeld eines Steuersignalblockes für jede vorgesehene Prüfschleife in der jeweiligen elektrischen Einrichtung ein gesondertes Bit reserviert ist, durch dessen logischen Pegel ein Aktivieren bzw. Deaktivieren der jeweiligen Prüfschleife angezeigt wird.

4. Verfahren nach Anspruch 3,
**dadurch gekennzeichnet,**
daß der jeweilige Datenblock abschnittweise unter einem individuellen Quittieren jedes der Abschnitte durch die Bedieneinrichtung (PC) übertragen wird.

5. Verfahren nach einem der Ansprüche 1 bis 4,
**dadurch gekennzeichnet,**
daß nach der Aktivierung einer Prüfschleife von der Bedieneinrichtung (PC) her eine Prüfinformation übertragen wird, welche nach Durchlauf der jeweiligen Prüfschleife und einer damit gegebenenfalls verbundenen Modifizierung durch die jeweilige elektrische Einrichtung in der Bedieneinrichtung ausgewertet wird.

6. Verfahren nach einem der Ansprüche 1 bis 4,
**dadurch gekennzeichnet,**
daß nach der Aktivierung einer Prüfschleife durch die Bedieneinrichtung (PC) von der mit dieser verbundenen elektrischen Einrichtung (DUE1) her eine Prüfinformation generiert und übertragen wird, welche nach Durchlaufen der jeweiligen Prüfschleife und einer damit gegebenenfalls verbundenen Modifizierung in der betreffenden elektrischen Einrichtung ausgewertet wird und daß von der betreffenden elektrischen Einrichtung her ein Informationen bezüglich der Auswertung enthaltender Steuersignalblock zu der Bedieneinrichtung hin übertragen wird.

7. Verfahren nach einem der Ansprüche 1 bis 4,
**dadurch gekennzeichnet,**
daß nach der Aktivierung einer Prüfschleife durch die Bedieneinrichtung (PC) von einer gesonderten, mit einer weiteren Datenschnittstelle (E/A3) der ersten elektrischen Einrichtung verbundenen Prüfeinrichtung eine Prüfinformation generiert und übertragen wird, welche nach dem Durchlauf der jeweiligen Prüfschleife und einer damit gegebenenfalls verbundenen Modifizierung durch die Prüfeinrichtung ausgewertet und das Ergebnis der Auswertung in dieser Prüfeinrichtung selbst angezeigt wird.
